# EUROPEAN PATENT SPECIFICATION

(11) **EP 2 237 626 B1**
(45) Date of publication and mention of the grant of the patent: **11.03.2015**
(21) Application number: 08870853.2
(22) Date of filing: 25.12.2008
(51) Int. Cl.: H04W 52/24, H04W 52/34, H04W 52/42

(54) **A METHOD AND A DEVICE FOR IMPLEMENTING THE MULTI-CARRIER POWER SHARE**
VERFAHREN UND VORRICHTUNG ZUR DURCHFÜHRUNG EINER MEHRTRÄGER-LEISTUNGSVERTEILUNG
PROCÉDÉ ET DISPOSITIF PERMETTANT LA MISE EN OEUVRE D'UNE PARTIE D'UNE PUISSANCE MULTIPORTEUSE

(30) Priority: 27.12.2007 CN 200710198665; 21.03.2008 CN 200810084417
(43) Date of publication of application: 06.10.2010
(60) Divisional application: 14152923.0
(73) Proprietor: Huawei Technologies Co., Ltd., Longgang District, Shenzhen Guangdong 518129 (CN)
(72) Inventor: TANG, Haizheng, Shenzhen Guangdong 518129 (CN)
(74) Representative: Epping, Wilhelm
(86) International application number: PCT/CN2008/073737
(87) International publication number: WO 2009/089732

(56) References cited:
- EP-A1- 1 798 884
- EP-A2- 1 455 465
- WO-A1-2006/126616
- CN-A- 1 722 653
- CN-A- 1 732 698
- CN-A- 101 242 664
- FR-A1- 2 897 734
- US-A1- 2002 094 833
- US-A1- 2004 248 606
- '3GPP TSG-RAN Working Group 1 Meeting #44bis, 27-31 March 2006', ATHENS, GREECE article 'Adaptive Fractional Frequency Reuse', pages 4 - 12

## Description

### Field of the Invention

The present invention relates to communications technologies, and in particular, to a method and device for sharing multi-carrier power.

### Background of the Invention

With over 20 years' development of the Global System for Mobile communications (GSM), there are now a huge number of devices operating on the GSM network and the network size is increasing continuously at a high speed. Large-capacity sites are accounting for a larger and larger proportion but the prior devices are mainly single-carrier transceivers. To support large-capacity sites, multiple combinations are required, which results in great loss and low efficiency. With the development of wireless technologies, multi-carrier technologies are widely used in Wideband Code Division Multiple Access (WCDMA) and Code Division Multiple Access (CDMA) systems. The application of multi-carrier technologies to GSM networks is also promoted. With the increase of GSM carriers, however, the peak-to-average ratio of signals is higher and higher. If the Power Amplifier (PA) is not updated, the output power per carrier will also fall and the coverage will be smaller.

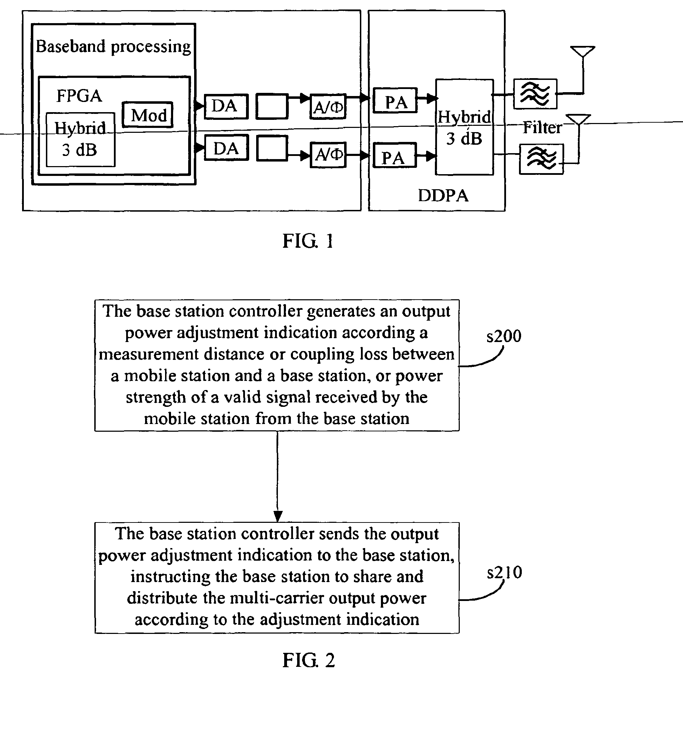

GSM dual-transceiver base stations with single-carrier techniques are used on a large scale on networks, and the Power Booster Technology (PBT) is widely used to increase coverage. As shown in FIG. 1, there are two independent radio transmission channels, which work independently when they are not combined, outputting two carrier signals respectively. When it is necessary to increase the output power so as to increase coverage, the two transmit powers are combined. In this way, the output power is increased with compromising the system capacity. EP 1798884A1 discloses a method for transmitting radio signals using a multicarrier modulation system, so as to realize radio data communication with high frequency efficiency and make all mobile station apparatus existing within a cell perform radio data communication without being affected by the deteriorated propagation path characteristics. FR 2897734A1 discloses a method for a transmitting method for implementing space division multiplex on transmitting signals of N carries, so as to overcome fading without increase on noise of received signal. EP 1455465A2 discloses a method for setting for each base station an offset value based on the communication quality at that base station so as to set a target transmission power value of a downlink from the base station to a mobile station, enabling an appropriate controlling of the transmission power of the downlink using a power-balancing control. US 20040248606A1 discloses a method for controlling gain of an amplifying section by adding an offset to the transmission power when the destination apparatus is not in an HO state. US 20020094833A1 discloses a method for determining the transmit power of a common or shared downlink transport channel regulates that power based on one or more factors.

### Summary of the Invention

Embodiments of the present invention provide a method and device for sharing multi-carrier power to achieve automatic adjustment of the transmit powers of the carriers on a multi-carrier channel.

In one aspect, the present invention provides a method for sharing multi-carrier power, which includes:
generating (s200), by a network device, an output power adjustment indication according to power strength of a valid signal received by the user equipment from the base station; and
instructing (s210), by the network device, the base station to share and distribute multi-carrier output power according to the output power adjustment indication by sending the base station the output power adjustment indication;
wherein the output power adjustment indication is used to instruct the base station to adjust carrier output power consumed by a first user equipment to make the carrier output power be above an average output power per carrier, wherein the first user equipment receives from the base station a low-strength valid signal; and
the output power adjustment indication is used to instruct the base station to adjust carrier output power consumed by a second user equipment to make the carrier output power be below the average output power per carrier, wherein the second user equipment receives from the base station a high-strength valid signal by being above a preset threshold.

In another aspect, the present invention provides a system for sharing multi-carrier power, which includes:
a base station controller, adapted to generate an output power adjustment indication according to power strength of a valid signal received by the user equipment from the base station and send the output power adjustment indication to the base station, wherein the output power adjustment indication is used to instruct the base station to adjust carrier output power consumed by a first user equipment to make the carrier output power be above an average output power per carrier, wherein the first user equipment receives from the base station a low-strength valid signal; and
the output power adjustment indication is used to instruct the base station to adjust carrier output power consumed by a second user equipment to make the carrier output power be below the average output power per carrier, wherein the second user equipment receives from the base station a high-strength valid signal by being above a preset threshold; and
the base station, adapted to adjust the carrier output power according to the power adjustment indication.

In another aspect, the present invention provides a base station controller, which includes:
a distributing unit, adapted to generate an output power adjustment indication according to power strength of a valid signal received by the user equipment from the base station, wherein the output power adjustment indication is used to instruct the base station to adjust carrier output power consumed by a first user equipment to make the carrier output power be above an average output power per carrier, wherein the first user equipment receives from the base station a low-strength valid signa; and
the output power adjustment indication is used to instruct the base station to adjust carrier output power consumed by a second user equipment to make the carrier output power be below the average output power per carrier, wherein the second user equipment receives from the base station a high-strength valid signal by being above a preset threshold; and
a power adjustment indication sending module, adapted to send the output power adjustment indication to the base station, wherein the output power adjustment indication is used to instruct the base station to share and distribute the multi-carrier output power.

In another aspect, the present invention provides a base station, which includes:
an indication obtaining module, configured to obtain an output power adjustment indication from a base station controller; and
a power adjusting module, configured to adjust carrier output power according to the power adjustment indication;
wherein the output power adjustment indication is used to instruct the base station to adjust carrier output power consumed by a first user equipment to make the carrier output power be above an average output power per carrier, wherein the first user equipment receives from the base station a low-strength valid signal; and
the output power adjustment indication is used to instruct the base station to adjust carrier output power consumed by a second user equipment to make the carrier output power be below the average output power per carrier, wherein the second user equipment receives from the base station a high-strength valid signal by being above a preset threshold.

In comparison with the prior art, the embodiments of the present invention implements that: The carrier output power is adjusted dynamically without changes in main hardware such as the PA by scheduling by the base station controller according to one of the distance, coupling loss between the user equipment and the base station and the power strength of a valid signal received by the user equipment from the base station. The carrier output power is thus increased to the effect of coverage enhancement and cost reduction.

### Brief Description of the Drawings

FIG 1 is a schematic drawing of PBT used in a dual-transceiver base station in a prior art;
FIG 2 is a flowchart of a method for sharing multi-carrier power in an embodiment of the present invention; and
FIG 3 is a schematic drawing of the transmission link of a multi-carrier base station in an embodiment of the present invention.

### Detailed Description of the Embodiments

During the implementation of the present invention, the inventor discovers at least the following weakness in the prior art:
A dual-transceiver base station in the prior art adopts the PBT but compromises the system capacity and two carriers can work as only one carrier. Further, to enable timeslot based power sharing, it requires a high hardware response speed that two transmit powers are output after being combined.

In the prior art, a multi-carrier transmitter uses multiple carriers to carry multiple valid signals respectively on one channel. As one channel supports more carriers, the peak-to-average ratio of the output signal will be higher and power back off will be greater. If a PA with a higher output power is not adopted, the output power per carrier will drop, thus impacting coverage.

An embodiment of the present invention provides a method for sharing multi-carrier power. As shown in FIG 2, the method includes the following steps:
Step s200: An output power adjustment indication is generated according to the measurement distance or coupling loss between a user equipment and a base station or the power strength of a valid signal received by the user equipment from the base station. For example, a network device, such as a base station controller, dynamically adjusts the output power per timeslot per carrier of the base station and sends a output power adjustment indication according to location situation of subscribers (that is, user equipment) in the cell, such as the distance between the user equipment and the base station, the coupling loss between the user equipment and the base station, or power strength of a valid signal received by the user equipment from the base station.
Step s210: The base station controller sends the base station the output power adjustment indication to instruct the base station to share and distribute the multi-carrier output power according to the output power adjustment indication. Specifically, the base station controller sends the base station the output power adjustment indication to instruct the base station to: adjust carrier output power consumed by a user equipment that is far from the base station, or has a large coupling loss, or receives a low-strength valid signal from the base station to make the carrier output power be above the average output power per carrier; adjust carrier output power consumed by a user equipment that is near to the base station, or has a small coupling loss, or receives a high-strength valid signal (that is, above a preset threshold) from the base station to make the carrier output power be below the average output power per carrier.

The total power of carriers outputted by the base station is not higher than the product of the number of multi-carrier outputs n and the average output power per carrier; the average output power per carrier equals the maximum PA output power divided by n. The maximum PA output power may fluctuate depending on the PA. The fluctuation is described as the output power capability range of the PA.

In the above embodiment, with respect to a GSM base station, mobile subscribers of a cell are located randomly in the coverage of the cell. Some subscribers are far from the base station and some are near. The valid signals they receive vary in signal strength. The output powers of the base station at the frequencies occupied by the subscribers are also different. The base station may adjust the carrier output power dynamically according to the output power adjustment indication from the base station controller. Thus, power sharing is realized and the saved power can be used by other carriers so as to reduce network interference and power consumption.

In addition, the power distribution and combination in the embodiment are implemented by software or logic in the digital domain. The response speed is not impacted by hardware and can reach the timeslot level.

A system for sharing multi-carrier power provided in an embodiment of the present invention includes: a base station controller, adapted to generate an output power adjustment indication according to the measurement distance or coupling loss between a user equipment and a base station or the power strength of a valid signal received by the user equipment from the base station and send the base station the output power adjustment indication to instruct the base station to share and distribute multi-carrier output power; and the base station, adapted to adjust the carrier output power dynamically according to the output power adjustment indication, specifically, adjust the carrier output power consumed by a user equipment that is far from the base station, or has a large coupling loss, or receives a low-strength valid signal from the base station to make the carrier output power be above the average output power per carrier; adjust the carrier output power consumed by a user equipment that is near to the base station, or has a small coupling loss, or receives a high-strength valid signal from the base station to make the carrier output power be below the average output power per carrier.

The base station controller includes: a distributing module, adapted to generate the output power adjustment indication according to the measurement distance or coupling loss between the user equipment and the base station or the power strength of a valid signal received by the user equipment from the base station; and a power adjustment indication sending module, adapted to send the base station the output power adjustment indication to instruct the base station to share and distribute the multi-carrier output power.

The base station includes: an indication obtaining module, adapted to obtain the output power adjustment indication from the base station controller; a power adjusting module, adapted to adjust the carrier output power dynamically according to the output power adjustment indication, specifically, adjust the carrier output power consumed by a user equipment that is far from the base station, or has a high coupling loss, or receives a low-strength valid signal from the base station to make the carrier output power be above the average output power per carrier; adjust the carrier output power consumed by a user equipment that is near to the base station, or has a low coupling loss, or receives a high-strength valid signal from the base station to make the carrier output power be below the average output power per carrier.

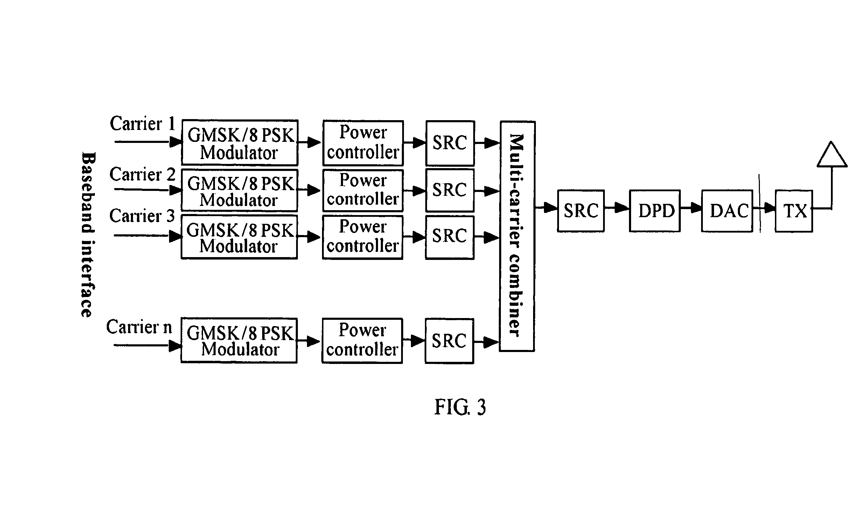

The above method is described with respect to an exemplary GSM multi-carrier transceiver. FIG. 3 is a schematic drawing of the transmission link of the GSM multi-carrier transceiver in a base station. Carrier 1, carrier 2, ..., and carrier n are separate in the baseband. Through the modulator, power controller, and sample rate converter (SRC), transmit signals are synthesized in the multi-carrier combiner and the combined signal goes through the SRC and digital predistortion (DPD) and is converted to an analog signal by the digital to analog converter (DAC). The analog signal is frequency-converted and amplified by the transmitter (TX) and finally transmitted by the antenna. If power sharing is not adopted, the power per carrier is even. If the maximum output power per carrier is P_{average}, the maximum total output power is n × P_{average}. To achieve a higher output power and wider coverage, the output power capability of the PA must be improved and the costs of the PA are higher. Moreover, the power consumption is increased, which increases the operation costs of the operator and also increases the cost and difficulty of system design. A power sharing solution is provided in an embodiment of the present invention. The solution includes: adjusting the output power per carrier of a GSM multi-carrier transceiver dynamically according to the distance or coupling loss between a user equipment and a base station or the power strength of a valid signal received by a user equipment from a base station under control of the scheduling of the base station controller, without changing the main hardware such as the PA. Thereby, the solution achieves power sharing and enhances the coverage. The carrier output power adjustment of the multi-carrier transceiver is carried out according to the instruction of the base station controller and implemented in digital domain before combination in the multi-carrier combiner. The entire process is as follows:

In the embodiment of the present invention, set the output power of a broadcast control channel (BCCH) is P_{B} (P_{B}≥P_{average}) according to the uplink-downlink balance and system coverage requirement. The base station controller adjusts the output power dynamically according to location situation of a subscriber in the cell of a base station corresponding to the base station controller. For example, with regard to a subscriber located at the cell edge, if the occupied frequency is fᵢ, because the coupling loss is relatively great, the power strength of the fᵢ signal received by the subscriber is low and the output power of the multi-carrier transceiver at fᵢ may be high. In this case, the base station controller adjusts the output power to Pᵢ(Pᵢ≥P_{average}, 1≤i≤n) to satisfy the system coverage requirement. There may be more such subscribers and therefore the dynamic PA output power adjustment may be achieved at least at the timeslot level. As for a subscriber relatively near to the base station, the frequency at current timeslot is fⱼ and the power strength of the fⱼ signal received by the subscriber is high. Therefore, the base station controller reduces the output power dynamically to Pⱼ (Pⱼ<P_{average}, 1≤j≤n). There may be more such subscribers and the dynamic PA output power adjustment may be achieved at least at the timeslot level. Through the dynamic adjustment, the sum of the n carrier powers outputted by the base station (P₁ + P₂ + ... + Pᵢ + ... + Pn) is not higher than n × P_{average} or is within the output power capability range of the PA.

In the embodiment of the present invention, the carrier output power is adjusted dynamically under control of the scheduling of the base station controller according to the distance or coupling loss between the user equipment and the base station or the power strength of a valid signal received by the user equipment from the base station, without changes in main hardware such as the PA. The carrier output power is thus increased, realizing the effect of coverage enhancement and cost reduction.

In addition, the power distribution and combination in the embodiment are implemented by software or logic in the digital domain. The response speed is not impacted by hardware and can reach the timeslot level.

Through the descriptions of the preceding embodiments, those skilled in the art may understand that the present invention may be implemented by hardware only or by software and a necessary universal hardware platform. Based on such understandings, the technical solution of the present invention may be embodied in the form of a software product. The software product may be stored in a nonvolatile storage medium, which may be a Compact Disk Read-Only Memory (CD-ROM), a USB disk, or a removable hard disk. The software product includes a number of instructions that enable a computer device (personal computer, server, or network device) to execute the methods provided in the embodiments of the present invention.

The above descriptions are merely exemplary embodiments of the present invention, but not intended to limit the scope of the present invention. Any modification, equivalent replacement, or improvement made without departing from the principle of the present invention should fall within the scope of the present invention, as defined by the appended claims.

## Claims

1. A method for sharing multi-carrier power, **characterized by** comprising:
generating, by a network device, an output power adjustment indication according to power strength of valid signals received by user equipments in a cell from a base station (s200); and
instructing, by the network device, the base station to share and distribute multi-carrier output power according to the output power adjustment indication by sending the base station the output power adjustment indication (s210);
wherein the output power adjustment indication is used to instruct the base station to adjust carrier output power consumed by a first user equipment to make the carrier output power be above an average output power per carrier, wherein the first user equipment receives from the base station a low-strength valid signal; and
the output power adjustment indication is used to instruct the base station to adjust carrier output power consumed by a second user equipment to make the carrier output power be below the average output power per carrier, wherein the second user equipment receives from the base station a high-strength valid signal by being above a preset threshold.

2. The method of claim 1, further comprising:
adjusting, by the base station, carrier output power consumed by the first user equipment to make the carrier output power be above an average output power per carrier, wherein the first user equipment receives from the base station a low-strength valid signal; and
adjusting, by the base station, carrier output power consumed by the second user equipment to make the carrier output power be below the average output power per carrier, wherein the second user equipment receives from the base station a high-strength valid signal by being above a preset threshold.

3. The method of claim 1 or claim 2, wherein:
a total power of carriers outputted by the base station is not higher than a product of the number of carrier outputs and an average output power per carrier.

4. The method of any one of claims 1 to 3, wherein the sharing multi-carrier power is achieved at least at a timeslot level.

5. A system for sharing multi-carrier power, **characterized by** comprising:
a base station controller, configured to generate an output power adjustment indication according to power strength of valid signals received by user equipments in a cell from a base station and send the output power adjustment indication to the base station, wherein the output power adjustment indication is used to instruct the base station to adjust carrier output power consumed by a first user equipment to make the carrier output power be above an average output power per carrier, wherein the first user equipment receives from the base station a low-strength valid signal; and
the output power adjustment indication is used to instruct the base station to adjust carrier output power consumed by a second user equipment to make the carrier output power be below the average output power per carrier, wherein the second user equipment receives from the base station a high-strength valid signal by being above a preset threshold; and
the base station, configured to adjust the carrier output power according to the power adjustment indication.

6. The system of claim 5, wherein the base station controller comprises:
a distributing module, configured to generate the output power adjustment indication according to power strength of a valid signal received by the user equipment from the base station; and
a power adjustment indication sending module, configured to send the output power adjustment indication to the base station, wherein the output power adjustment indication is used to instruct the base station to share and distribute the multi-carrier output power.

7. The system of claim 5 or claim 6, wherein the base station comprises:
an indication obtaining module, configured to obtain the output power adjustment indication from the base station controller.

8. The system of any one of claims 5 to 7, wherein the base station comprises:
a power adjusting module, configured to adjust the carrier output power consumed by the first user equipment to make the carrier output power be above the average output power per carrier, wherein the first user equipment receives from the base station a low-strength valid signal; and adjust the carrier output power consumed by the second user equipment to make the carrier output power be below the average output power per carrier, wherein the second user equipment receives from the base station a high-strength valid signal by being above a preset threshold.

9. A base station controller, **characterized by** comprising:
a distributing unit, configured to generate an output power adjustment indication according to power strength of valid signals received by user equipments in a cell from a base station, wherein the output power adjustment indication is used to instruct the base station to adjust carrier output power consumed by a first user equipment to make the carrier output power be above an average output power per carrier, wherein the first user equipment receives from the base station a low-strength valid signal; and
the output power adjustment indication is used to instruct the base station to adjust carrier output power consumed by a second user equipment to make the carrier output power be below the average output power per carrier, wherein the second user equipment receives from the base station a high-strength valid signal by being above a preset threshold; and
a power adjustment indication sending module, configured to send the output power adjustment indication to the base station, wherein the output power adjustment indication is used to instruct the base station to share and distribute the multi-carrier output power.

10. A base station, **characterized by** comprising:
an indication obtaining module, configured to obtain an output power adjustment indication from a base station controller; and
a power adjusting module, configured to adjust carrier output power according to the power adjustment indication;
wherein the output power adjustment indication is used to instruct the base station to adjust the carrier output power consumed by a first user equipment to make the carrier output power be above the average output power per carrier, wherein the first user equipment receives from the base station a low-strength valid signal; and the output power adjustment indication is used to instruct the base station to adjust the carrier output power consumed by a second user equipment to make the carrier output power be below the average output power per carrier, wherein the second user equipment receives from the base station a high-strength valid signal by being above a preset threshold.

## Patentansprüche

1. Verfahren zum Teilen von Mehrträgerleistung, **dadurch gekennzeichnet, dass** es Folgendes umfasst:
Erzeugen einer Ausgangsleistungs-Einstellangabe gemäß der Leistungsstärke von gültigen Signalen, die durch Anwendergeräte in einer Zelle von einer Basisstation empfangen werden, durch eine Netzvorrichtung (s200); und
Anweisen der Basisstation, die Mehrträger-Ausgangsleistung gemäß der Ausgangsleistungs-Einstellangabe zu teilen und zu verteilen, durch Senden der Ausgangsleistungs-Einstellangabe an die Basisstation durch die Netzvorrichtung (s210);
wobei die Ausgangsleistungs-Einstellangabe verwendet wird, die Basisstation anzuweisen, die durch ein erstes Anwendergerät verbrauchte Trägerausgangsleistung einzustellen, um zu bewirken, dass die Trägerausgangsleistung über einer durchschnittlichen Ausgangsleistung pro Träger liegt, wobei das erste Anwendergerät von der Basisstation ein gültiges Signal mit geringer Stärke empfängt; und
die Ausgangsleistungs-Einstellangabe verwendet wird, die Basisstation anzuweisen,
die durch ein zweites Anwendergerät verbrauchte Trägerausgangsleistung einzustellen, um zu bewirken, dass die Trägerausgangsleistung unter der durchschnittlichen Ausgangsleistung pro Träger liegt, wobei das zweite Anwendergerät von der Basisstation ein gültiges Signal mit hoher Stärke empfängt, indem es über einem vorgegebenen Schwellenwert liegt.

2. Verfahren nach Anspruch 1, das ferner Folgendes umfasst:
Einstellen der durch das erste Anwendergerät verbrauchten Trägerausgangsleistung, um zu bewirken, dass die Trägerausgangsleistung über einer durchschnittlichen Ausgangsleistung pro Träger liegt, durch die Basisstation, wobei das erste Anwendergerät von der Basisstation ein gültiges Signal mit geringer Stärke empfängt; und
Einstellen der durch das zweite Anwendergerät verbrauchten Trägerausgangsleistung, um zu bewirken, dass die Trägerausgangsleistung unter der durchschnittlichen Ausgangsleistung pro Träger liegt, durch die Basisstation, wobei das zweite Anwendergerät von der Basisstation ein gültiges Signal mit hoher Stärke empfängt, indem es über einem vorgegebenen Schwellenwert liegt.

3. Verfahren nach Anspruch 1 oder 2, wobei:
eine Gesamtleistung der durch die Basisstation ausgegebenen Träger nicht höher als ein Produkt aus der Anzahl von Trägerausgaben und einer durchschnittlichen Ausgangsleistung pro Träger ist.

4. Verfahren nach einem der Ansprüche 1 bis 3, wobei das Teilen der Mehrträgerleistung wenigstens auf einer Zeitschlitzebene erreicht wird.

5. System zum Teilen von Mehrträgerleistung, **dadurch gekennzeichnet, dass** es Folgendes umfasst:
einen Basisstations-Controller, der konfiguriert ist, eine Ausgangsleistungs-Einstellangabe gemäß der Leistungsstärke von gültigen Signalen, die durch Anwendergeräte in einer Zelle von einer Basisstation empfangen werden, zu erzeugen und die Ausgangsleistungs-Einstellangabe an die Basisstation zu senden, wobei die Ausgangsleistungs-Einstellangabe verwendet wird, die Basisstation anzuweisen, die durch ein erstes Anwendergerät verbrauchte Trägerausgangsleistung einzustellen, um zu bewirken, dass die Trägerausgangsleistung über einer durchschnittlichen Ausgangsleistung pro Träger liegt, wobei das erste Anwendergerät von der Basisstation ein gültiges Signal mit geringer Stärke empfängt; und
die Ausgangsleistungs-Einstellangabe verwendet wird, die Basisstation anzuweisen, die durch ein zweites Anwendergerät verbrauchte Trägerausgangsleistung einzustellen, um zu bewirken, dass die Trägerausgangsleistung unter der durchschnittlichen Ausgangsleistung pro Träger liegt, wobei das zweite Anwendergerät von der Basisstation ein gültiges Signal mit hoher Stärke empfängt, indem es über einem vorgegebenen Schwellenwert liegt; und
die Basisstation, die konfiguriert ist, die Trägerausgangsleistung gemäß der Leistungseinstellangabe einzustellen.

6. System nach Anspruch 5, wobei der Basisstations-Controller Folgendes umfasst:
ein Verteilungsmodul, das konfiguriert ist, die Ausgangsleistungs-Einstellangabe gemäß der Leistungsstärke eines durch das Anwendergerät von der Basisstation empfangenen gültigen Signals zu erzeugen; und
ein Leistungseinstellangabe-Sendemodul, das konfiguriert ist, die Ausgangsleistungs-Einstellangabe an die Basisstation zu senden, wobei die Ausgangsleistungs-Einstellangabe verwendet wird, die Basisstation anzuweisen, die Mehrträger-Ausgangsleistung zu teilen und zu verteilen.

7. System nach Anspruch 5 oder 6, wobei die Basisstation Folgendes umfasst:
ein Angabeerhaltemodul, das konfiguriert ist, die Ausgangsleistungs-Einstellangabe von dem Basisstations-Controller zu erhalten.

8. System nach einem der Ansprüche 5 bis 7, wobei die Basisstation Folgendes umfasst:
ein Leistungseinstellmodul, das konfiguriert ist, die durch das erste Anwendergerät verbrauchte Trägerausgangsleistung einzustellen, um zu bewirken, dass die Trägerausgangsleistung über der durchschnittlichen Ausgangsleistung pro Träger liegt, wobei das erste Anwendergerät von der Basisstation ein gültiges Signal mit geringer Stärke empfängt; und die durch das zweite Anwendergerät verbrauchte Trägerausgangsleistung einzustellen, um zu bewirken, dass die Trägerausgangsleistung unter der durchschnittlichen Ausgangsleistung pro Träger liegt, wobei das zweite Anwendergerät von der Basisstation ein gültiges Signal mit hoher Stärke empfängt, indem es über einem vorgegebenen Schwellenwert liegt.

9. Basisstations-Controller, **dadurch gekennzeichnet, dass** er Folgendes umfasst:
eine Verteilungseinheit, die konfiguriert ist, eine Ausgangsleistungs-Einstellangabe gemäß der Leistungsstärke von gültigen Signalen, die durch Anwendergeräte von einer Basisstation empfangen werden, zu erzeugen, wobei die Ausgangsleistungs-Einstellangabe verwendet wird, die Basisstation anzuweisen, die durch ein erstes Anwendergerät verbrauchte Trägerausgangsleistung einzustellen, um zu bewirken, dass die Trägerausgangsleistung über einer durchschnittlichen Ausgangsleistung pro Träger liegt, wobei das erste Anwendergerät von der Basisstation ein gültiges Signal mit geringer Stärke empfängt; und
die Ausgangsleistungs-Einstellangabe verwendet wird, die Basisstation anzuweisen, die durch ein zweites Anwendergerät verbrauchte Trägerausgangsleistung einzustellen, um zu bewirken, dass die Trägerausgangsleistung unter der durchschnittlichen Ausgangsleistung pro Träger liegt, wobei das zweite Anwendergerät von der Basisstation ein gültiges Signal mit hoher Stärke empfängt, indem es über einem vorgegebenen Schwellenwert liegt; und
ein Leistungseinstellangabe-Sendemodul, das konfiguriert ist, die Ausgangsleistungs-Einstellangabe an die Basisstation zu senden, wobei die Ausgangsleistungs-Einstellangabe verwendet wird, die Basisstation anzuweisen, die Mehrträger-Ausgangsleistung zu teilen und zu verteilen.

10. Basisstation, **dadurch gekennzeichnet, dass** sie Folgendes umfasst:
ein Angabeerhaltemodul, das konfiguriert ist, eine Ausgangsleistungs-Einstellangabe von einem Basisstations-Controller zu erhalten; und
ein Leistungseinstellmodul, das konfiguriert ist, die Trägerausgangsleistung gemäß der Leistungseinstellangabe einzustellen;
wobei die Ausgangsleistungs-Einstellangabe verwendet wird, die Basisstation anzuweisen, die durch ein erstes Anwendergerät verbrauchte Trägerausgangsleistung einzustellen, um zu bewirken, dass die Trägerausgangsleistung über der durchschnittlichen Ausgangsleistung pro Träger liegt, wobei das erste Anwendergerät von der Basisstation ein gültiges Signal mit geringer Stärke empfängt; und die Ausgangsleistungs-Einstellangabe verwendet wird, die Basisstation anzuweisen, die durch ein zweites Anwendergerät verbrauchte Trägerausgangsleistung einzustellen, um zu bewirken, dass die Trägerausgangsleistung unter der durchschnittlichen Ausgangsleistung pro Träger liegt, wobei das zweite Anwendergerät von der Basisstation ein gültiges Signal mit hoher Stärke empfängt, indem es über einem vorgegebenen Schwellenwert liegt.

## Revendications

1. Procédé de partage d'une puissance multi-porteuse, **caractérisé en ce qu'**il comprend :
la génération, par un dispositif de réseau, d'une indication de réglage de puissance de sortie en fonction d'une force de puissance de signaux valables reçus par des équipements utilisateur dans une cellule depuis une station de base (s200) ; et
l'ordre, par le dispositif de réseau, à la station de base de partager et distribuer une puissance de sortie multi-porteuse en fonction de l'indication de réglage de puissance de sortie en envoyant à la station de base l'indication de réglage de puissance de sorite (s210) ;
dans lequel l'indication de réglage de puissance de sortie est utilisée pour ordonner à la station de base de régler la puissance de sortie de porteuse consommée par un premier équipement utilisateur pour qu'elle soit supérieure à une puissance de sortie moyenne par porteuse, le premier équipement utilisateur recevant de la station de base un signal valable de faible puissance ; et
l'indication de réglage de puissance de sortie est utilisée pour ordonner à la station de base de régler la puissance de sortie de porteuse consommée par un second équipement utilisateur pour qu'elle soit inférieure à la puissance de sortie moyenne par porteuse, le second équipement utilisateur recevant de la station de base un signal valable de forte puissance par le fait qu'il est supérieur à un seuil préétabli.

2. Procédé selon la revendication 1, comprenant en outre :
le réglage, par la station de base, d'une puissance de sortie de porteuse consommée par le premier équipement utilisateur pour qu'elle soit supérieure à une puissance de sortie moyenne par porteuse, le premier équipement utilisateur recevant de la station de base un signal valable de faible puissance ; et
le réglage, par la station de base, d'une puissance de sortie de porteuse consommée par le second équipement utilisateur pour qu'elle soit inférieure à la puissance de sortie moyenne par porteuse, le second équipement utilisateur recevant de la station de base un signal valable de forte puissance par le fait qu'il est supérieur à un seuil préétabli.

3. Procédé selon la revendication 1 ou la revendication 2, dans lequel :
une puissance totale de porteuses produite en sortie par la station de base n'est pas supérieure à un produit du nombre de sorties de porteuses et d'une puissance de sortie moyenne par porteuse.

4. Procédé selon l'une quelconque des revendications 1 à 3, dans lequel la puissance multi-porteuse de partage est obtenue au moins à un niveau de tranche de temps.

5. Système de partage d'une puissance multi-porteuse, **caractérisé en ce qu'**il comprend :
un contrôleur de station de base, configuré pour générer une indication de réglage de puissance de sortie en fonction d'une force de puissance de signaux valables reçus par des équipements utilisateur dans une cellule depuis une station de base et envoyer l'indication de réglage de puissance de sortie à la station de base, dans lequel l'indication de réglage de puissance de sortie est utilisée pour ordonner à la station de base de régler la puissance de sortie de porteuse consommée par un premier équipement utilisateur pour qu'elle soit supérieure à une puissance de sorite moyenne par porteuse, le premier équipement utilisateur recevant de la station de base un signal valable de faible puissance ; et
l'indication de réglage de puissance de sortie est utilisée pour ordonner à la station de base de régler la puissance de sortie de porteuse consommée par un second équipement utilisateur pour qu'elle soit inférieure à la puissance de sortie moyenne par porteuse, le second équipement utilisateur recevant de la station de base un signal valable de forte puissance par le fait qu'il est supérieur à un seuil préétabli ; et
la station de base, configurée pour régler la puissance de sortie de porteuse en fonction de l'indication de réglage de puissance.

6. Système selon la revendication 5, dans lequel le contrôleur de station de base comprend :
un module de distribution, configuré pour générer l'indication de réglage de puissance de sortie en fonction d'une force de puissance d'un signal valable reçu par l'équipement utilisateur depuis la station de base ; et
un module d'envoi d'indication de réglage de puissance, configuré pour envoyer l'indication de réglage de puissance de sortie à la station de base, l'indication de réglage de puissance de sortie étant utilisée pour ordonner à la station de base de partager et de distribuer la puissance de sortie multi-porteuse.

7. Système selon la revendication 5 ou la revendication 6, dans lequel la station de base comprend :
un module d'obtention d'indication, configuré pour obtenir l'indication de réglage de puissance de sortie depuis le contrôleur de station de base.

8. Système selon l'une quelconque des revendications 5 à 7, dans lequel la station de base comprend :
un module de réglage de puissance, configuré pour régler la puissance de sortie de porteuse consommée par le premier équipement utilisateur pour qu'elle soit supérieure à la puissance de sortie moyenne par porteuse, le premier équipement utilisateur recevant de la station de base un signal valable de faible puissance ; et
régler la puissance de sortie de porteuse consommée par le second équipement utilisateur pour qu'elle soit inférieure à la puissance de sortie moyenne par porteuse, le second équipement utilisateur recevant de la station de base un signal valable de forte puissance par le fait qu'il est supérieur à un seuil préétabli.

9. Contrôleur de station de base, **caractérisé en ce qu'**il comprend :
une unité de distribution, configurée pour générer une indication de réglage de puissance de sortie en fonction d'une force de puissance de signaux valables reçus par des équipements utilisateur dans une cellule depuis une station de base, dans laquelle l'indication de réglage de puissance de sortie est utilisée pour ordonner à la station de base de régler la puissance de sortie de porteuse consommée par un premier équipement utilisateur pour qu'elle soit supérieure à une puissance de sortie moyenne par porteuse, le premier équipement utilisateur recevant de la station de base un signal valable de faible puissance ; et
l'indication de réglage de puissance de sortie est utilisée pour ordonner à la station de base de régler la puissance de sortie de porteuse consommée par un second équipement utilisateur pour qu'elle soit inférieure à la puissance de sortie moyenne par porteuse, le second équipement utilisateur recevant de la station de base un signal valable de forte puissance par le fait qu'il est supérieur à un seuil préétabli ; et
un module d'envoi d'indication de réglage de puissance, configuré pour envoyer l'indication de réglage de puissance de sortie à la station de base, l'indication de réglage de puissance de sortie étant utilisée pour ordonner à la station de base de partager et de distribuer la puissance de sortie multi-porteuse.

10. Station de base, **caractérisée en ce qu'**elle comprend :
un module d'obtention d'indication, configuré pour obtenir une indication de réglage de puissance de sortie depuis un contrôleur de station de base ; et
un module de réglage de puissance, configuré pour régler la puissance de sortie de porteuse en fonction de l'indication de réglage de puissance ;
dans laquelle l'indication de réglage de puissance de sortie est utilisée pour ordonner à la station de base de régler la puissance de sortie de porteuse consommée par un premier équipement utilisateur pour qu'elle soit supérieure à la puissance de sortie moyenne par porteuse, le premier équipement utilisateur recevant de la station de base un signal valable de faible puissance ; et l'indication de réglage de puissance de sortie est utilisée pour ordonner à la station de base de régler la puissance de sortie de porteuse consommée par un second équipement utilisateur pour qu'elle soit inférieure à la puissance de sortie moyenne par porteuse, le second équipement utilisateur recevant de la station de base un signal valable de forte puissance par le fait qu'il est supérieur à un seuil préétabli.
